# EUROPÄISCHE PATENTSCHRIFT

(11) **EP 1 182 422 B1**
(45) Veröffentlichungstag und Bekanntmachung des Hinweises auf die Patenterteilung: **21.11.2007**
(21) Anmeldenummer: 00117841.7
(22) Anmeldetag: 18.08.2000
(51) Int. Cl.: G01B 7/02, F16K 37/00

(54) **Linearbetätigungsvorrichtung**
Linear actuator
Actionneur linéaire

(43) Veröffentlichungstag der Anmeldung: 27.02.2002
(60) Teilanmeldung: 07015115.4
(73) Patentinhaber: Cameron International Corporation, Houston, TX 77027-9109 (US)
(72) Erfinder: Biester, Klaus, 29342 Wienhausen (DE); Kunow, Peter, 12356 Berlin (DE)
(74) Vertreter: Grünecker, Kinkeldey, Stockmair & Schwanhäusser Anwaltssozietät

(56) Entgegenhaltungen:
- EP-A- 0 098 507
- DE-U- 20 008 415
- US-A- 4 747 313
- US-A- 5 038 622
- CHR.ROHRBACH: "Handbuch für elektrisches Messen mechanischer Grössen" 1967 , VDI - VERLAG , DÜSSELDORF (DE) XP002156890 * Seite 448 - Seite 449 *

## Beschreibung

Die Erfindung betrifft eine Linearbetätigungsvorrichtung mit einer Wegmessvorrichtung.

Aus der Praxis ist beispielsweise eine entsprechende Wegmessvorrichtung zur Messung eines von einem entlang einer Richtung auslenkbaren Bewegungsobjekts zurückgelegten Weges bekannt. Ein erstes Bauteil der Wegmessvorrichtung ist dem Bewegungsobjekt zugeordnet und bewegt sich mit diesem. Ein zweites Bauteil der Wegmessvorrichtung ist ortsfest. Die beiden Bauteile sind miteinander gekoppelt, um die Bewegung und/oder Auslenkung des Bewegungsobjekts in ein elektrisches Signal umzusetzen. Dieses elektrische Signal wird einer Auswerteeinrichtung der Wegmessvorrichtung übermittelt und dort in eine Bewegungs- und/oder Positionsinformation umgesetzt.

Ein Beispiel für eine solche vorbekannte Wegmessvorrichtung ist ein potentiometerartiger Sensor. Das erste Bauteil dieses Sensors ist durch einen spulenartig aufgewickelten Draht und das zweite Bauteil durch ein außen entlang dieser Spulenwicklung bewegbares Kontaktelement gebildet. Je nach Stellung des Kontaktelementes relativ zur Spulenwicklung ergibt sich ein entsprechender Widerstand für einen durch Spulenwicklung und Kontaktelement fließenden Strom, der in eine Positionsinformation umsetzbar ist.

Ein weiteres Beispiel für eine bekannte Wegmessvorrichtung ist eine magnetische oder induktive Wegmessung. Bei dieser ist eine Spule oder ein Teil eines Kondensators mit dem bewegten Objekt verbunden und eine weitere Spule bzw. der andere Teil des Kondensators ist ortsfest angeordnet.

Weitere bekannte Wegmessvorrichtungen verwenden beispielsweise optische Sensoren, wobei optisch die Bewegung eines mit dem Bewegungsobjekt bewegten ersten Bauteils ermittelt und durch den ortsfesten Sensor in ein entsprechenden Bewegungssignal umgesetzt wird. Schließlich sind noch Lasereinrichtungen zur Wegmessung bekannt.

Bei diesen vorbekannten Wegmessvorrichtungen ergeben sich verschiedene Nachteile.

Optische Messungen sind zwar sehr genau, aber gleichzeitig sehr empfindlich und nur bei guten Sichtverhältnissen einsetzbar, wobei sie gleichzeitig recht teuer sind.

Magnetische oder induktive Vorrichtungen sind empfindlich gegenüber Vibrationen, Stößen oder dergleichen und sind in der Regel auch recht teuer. Potentiometer-artige Sensoren sind recht ungenau und haben aufgrund von Abnutzungserscheinungen nur eine relativ kurze Einsatzzeit.

Eine weitere Wegmessvorrichtung ist aus der US 4 747 313 bekannt.

Der Erfindung liegt die Aufgabe zugrunde, eine Linearbetätigungsvorrichtung dahingehend zu verbessern, dass die Wegmessung mit hoher Genauigkeit, ohne Abnutzung, unempfindlich gegenüber Vibrationen, Stößen oder Korrosion und kostengünstig in fast allen Medien ohne spezielle Abdichtungen und in jedem Druckbereich einsetzbar ist.

Diese Aufgabe wird vorrichtungsmäßig durch die Merkmale des Patentanspruchs 1 gelöst.

Vorteilhafte Weiterbildungen ergeben sich durch die Merkmale der Unteransprüche.

Die Wegmessvorrichtung ist einfach aufgebaut. Das Federelement wird bei Bewegung eines Betätigungselements als Bewegungsobjekts gedehnt, wobei die im Federelement auftretende Rückhaltekraft im einfachsten Fall direkt proportional zum durch das Bewegungsobjekt zurückgelegten Weg ist. Die Rückhaltekraft wird durch das Federelement auf die Kraftmesseinrichtung übertragen und dort gemessen. Dabei wird von einer mit der Kraftmesseinrichtung verbundener Auswerteeinrichtung ein entsprechendes elektrisches Signal empfangen, das der Rückhaltekraft und damit dem durch das Bewegungsobjekt zurückgelegten Weg entspricht. Die für die Wegmessvorrichtung verwendeten Bauteile sind einfach aufgebaut und preiswert. Es findet keine Abnutzung dieser Bauteile statt, da beispielsweise keine Reibung zwischen den Bauteilen oder zwischen den Bauteilen und anderen Objekten auftritt. Die Wegmessvorrichtung ist unabhängig von einem Medium in dem sie angeordnet ist, von den Sichtbedingungen, von Vibrationen, Stößen oder dergleichen.

Bei einem einfachen Ausführungsbeispiel kann das Federelement eine Spiralfeder sein. Die Spiralfeder kann in diesem Zusammenhang so ausgewählt werden, dass eine auf das Bewegungsobjekt ausgeübte Rückhaltekraft und damit eine Einschränkung der sonstigen Beweglichkeit des Bewegungsobjekts relativ gering ist und gleichzeitig die Rückhaltekraft groß genug ist, um mittels der Kraftmesseinrichtung ein ausreichend großen Signal zu erhalten. Bei Verwendung einer solchen Spiralfeder als Federelement zeigt sich weiterhin, dass bei der Wegmessvorrichtung keine sich tatsächlich zusammen mit dem Bewegungsobjekt bewegenden Teile vorhanden sind. Die Spiralfeder bzw. das Federelement können insbesondere so ausgewählt werden, dass sie sich proportional zur ausgeübten Rückhaltekraft dehnen, so dass die Auswertung des Signals der Kraftmesseinrichtung und entsprechend die Ermittlung von Bewegung bzw. Position des Bewegungsobjekts vereinfacht ist.

Ein solches Federelement kann je nach Erfordernis mit entsprechender Federkonstanten, aus entsprechendem Material und dergleichen ausgewählt werden. Es sei an dieser Stelle darauf hingewiesen, dass bei der Wegmessvorrichtung nur eine begrenzte Bewegung des Bewegungsobjekts aufgrund der Verbindung mit dem Federelement und über dieses mit der Kraftmesseinrichtung möglich ist. Im Wesentlichen wird der Bewegungsbereich durch das Federelement und dessen auswertbare maximale Dehnung bestimmt.

Um die Wegmessvorrichtung in einfacher Weise an unterschiedliche Erfordernisse anzupassen, wie beispielsweise längere von dem Bewegungsobjekt zurückzulegende Wege oder dergleichen, kann das Federelement austauschbar sein. So sind die Federelemente entsprechend zu ihrer maximalen Dehnung auswählbar.

Die Kraftmesseinrichtung kann in unterschiedlicher Weise aufgebaut sein. Erfindungsgemäß muss eine solche Kraftmesseinrichtung die auf sie ausgeübte Kraft in ein entsprechendes elektrisches Signal umsetzen, das dann von der Auswerteeinheit erfasst und verarbeitet wird.

Bei einem einfachen und kostengünstig herstellbaren Ausführungsbeispiel weist die Kraftmesseinrichtung wenigstens einen elektrisch leitfähigen, insbesondere drahtförmigen Leiter auf, dessen elektrischer Widerstand abhängig von einer auf ihn in Längsrichtung ausgeübten Kraft ist. Ein solcher Leiter ist ebenfalls aus unterschiedlichen Materialien herstellbar, die beispielsweise hinsichtlich der Umgebungsbedingungen, unter denen die Wegmessvorrichtung eingesetzt wird, ausgewählt werden. Dadurch ist die erfindungsgemäße Wegmessvorrichtung auch in aggressiven Medien, unter Wasser, unter Druck, unter Vakuum und dergleichen im Wesentlichen ohne Einschränkungen einsetzbar. Durch den einfachen Aufbau der Wegmessvorrichtung ergibt sich kein Verschleiß und keine Abnutzung der einzelnen Teile, so dass die Lebensdauer außerordentlich hoch ist.

Da ein Federelement in der Regel eine weiche Dämpfungscharakteristik hat, werden entsprechende Vibrationen, Stöße oder dergleichen ohne Einfluss auf die Kraftmesseinrichtung übertragen.

Ein solcher elektrischer Leiter als Kraftmesseinrichtung ändert bei Ausüben einer entsprechenden Zugkraft auf den Leiter seinen elektrischen Widerstand und solche Widerstandsänderung kann über entsprechende Spannungs- oder Stromänderungen erfasst und als Signal in der Auswerteeinrichtung ausgewertet werden.

Um einen Nullpunkt zur Wegmessung in einfacher Weise festzulegen, kann das Federelement vorgespannt sein und erst bei weiterer Spannung des vorgespannten Federelementes wird ein entsprechendes Bewegungs- bzw. Positionssignal durch die Auswerteeinheit ermittelt.

Um bei einem drahtförmigen Leiter gewisse statistische Unregelmäßigkeiten des Drahtes, wie Durchmesserabweichungen, Änderungen in der Materialbeschaffenheit usw. in einfacher Weise zu kompensieren, kann der Leiter eine Anzahl von parallel zueinander angeordneten elektrisch leitfähigen Drähten aufweisen. Dadurch werden entsprechende statistische Abweichungen der einzelnen Drähte gemittelt und es ergibt sich eine über ihren gesamten Messbereich genau messende Kraftmesseinrichtung.

Die Drähte können Einzeldrähte sein oder durch einen einzelnen Draht gebildet sein, der mäanderförmig verlegt ist.

Um bei einem solchen elektrischen Leiter Änderungen im Widerstand in einfacher Weise feststellen zu können, kann der elektrische Leiter in einer Brückenschaltung, wie einer sogenannten Wheatstone-Brücke, verschaltet sein und wenigstens einen Widerstand in der Brückenschaltung bilden. Durch eine solche Brückenschaltung sind Messungen mit hoher Genauigkeit möglich, wodurch sich ebenfalls eine hohe Genauigkeit für die Positionsbestimmung des Bewegungsobjekts ergibt.

Um Änderungen des Widerstandes des Leiters aufgrund von Temperaturänderungen zu kompensieren, so dass diese nicht zu einer fehlerhaften Bestimmung der Position des Bewegungsobjekts führen, kann die Brückenschaltung einen weiteren Widerstand analog zu dem durch die Kraftmesseinrichtung gebildeten Widerstand aufweisen. Ist die Kraftmesseinrichtung beispielsweise durch eine Anzahl von Drähten gebildet, so wird dieser weitere Widerstand in gleicher Weise aufgebaut. Allerdings wird er im Gegensatz zur Kraftmesseinrichtung nicht einer entsprechenden Zugkraft durch das Federelement ausgesetzt.

Erfindungsgemäß ergibt sich durch die Verwendung der Brückenschaltung und der elektrisch leitfähigen Drähte als Kraftmesseinrichtung ein einfacher elektrischer Aufbau, der ebenfalls nur einfache Mittel bei der Auswerteeinrichtung bedingt. Beispielsweise sind ein Verstärker und/oder ein Differenzierer und/oder eine Ausgabeeinrichtung in Verbindung mit einem Mikroprozessor oder dergleichen die einzigen elektronischen Bestandteile die erforderlich sind. Der Differenzierer kann entfallen, falls beispielsweise auf eine Ermittlung der Geschwindigkeit oder Beschleunigung des Bewegungsobjekts bei dessen Bewegung verzichtet wird. Außerdem können Einrichtungen anderer Auswerteeinrichtungen verwendet werden, wenn diese beispielsweise softwaremäßig umstellbar sind.

Durch den einfachen, robusten und sicheren Aufbau der erfindungsgemäßen Linearbetätigungsvorrichtung ist diese insbesondere für Einsätze geeignet, die fernab und in unzugänglichen Gebieten erfolgen. Ein Einsatzgebiet ist beispielsweise die Verwendung der vorangehend beschriebenen Messvorrichtung für ein linear bewegtes Bewegungsobjekt einer Vorrichtung aus der Öl- und/oder Gasgewinnung. Entsprechende Vorrichtungen sind sogenannte Aktuatoren, BOP (blow out preventor), Ventile und dergleichen, wie sie bei der Öl- und Gasgewinnung notwendig sind. Dabei ist das Einsatzgebiet der erfindungsgemäßen Linearbetätigungsvorrichtung nicht auf Einsätze an Land beschränkt, sondern durch die Unempfindlichkeit gegenüber Druck oder anderen unwirtlichen Umgebungseinflüssen ist insbesondere auch ein Einsatz unter Wasser möglich. Dies gilt analog für einen unterirdischen Einsatz.

Bei der Öl- und Gasgewinnung werden insbesondere eine Reihe von Linearbetätigungsvorrichtungen verwendet, von denen eine beispielsweise in der DE 20 008 415 beschrieben wird. Eine solche Linearbetätigungsvorrichtung dient insbesondere zur Betätigung von Ventilen, Drosseln oder dergleichen bei der Öl- und/oder Gasgewinnung und weist zumindest ein innerhalb eines Gehäuses linearbeweglich gelagertes Betätigungselement und eine diesem zugeordnete Antriebsvorrichtung auf. Das Betätigungselement kann eine Kugelspindel sein, die in einer entsprechenden Mutter drehbar gelagert ist. Die Mutter ist mit der entsprechenden Antriebsvorrichtung bewegungsverbunden und eine dadurch induzierte Drehung der Mutter wird in eine Längsbewegung der Kugelspindel umgesetzt. Zur weiteren Beschreibung dieser Linearbetätigungsvorrichtung wird hiermit ausdrücklich nochmals auf die DE 20 008 415 verwiesen.

Um beispielsweise das Federelement vor einer Beschädigung durch sich bewegende Teile der Linearbetätigungsvorrichtung zu schützen, kann das Federelement in einem Rohr angeordnet und geführt sein.

Um das Federelement an seinen Enden in einfacher Weise sowohl am Betätigungselement als auch an der Kraftmesseinrichtung zu befestigen, kann das Federelement an seinen Enden entsprechende Anschlussstücke aufweisen. An diesen ist das Federelement mit einem Ende einhängbar und das Anschlussstück ist dann durch Verschrauben oder dergleichen am Betätigungselement bzw. an der Kraftmesseinrichtung lösbar zu befestigen.

Bei einer Linearbetätigungsvorrichtung, die ein sich durch eine Schraubbewegung linear vorwärts bewegendes Betätigungselement aufweist, ist es von Vorteil, wenn die entsprechende Drehung des Betätigungselementes nicht auf das Federelement übertragen wird und damit zu einer Spannung oder Kraft im Federelement führt, die nicht durch die lineare Bewegung des Betätigungselementes bedingt ist. Dazu kann beispielsweise zumindest das Anschlussstück zwischen Federelement und Betätigungselement eine Drehentkoppeleinrichtung aufweisen. Mittels dieser Drehentkoppeleinrichtung wird nur die lineare Bewegung des Betätigungselementes auf das Federelement übertragen und die Drehung wird von der Drehkoppeleinrichtung aufgenommen.

Die Kraftmesseinrichtung ist entsprechend ausgebildet, um die auf sie durch das Federelement ausgeübte Zugkraft in ein elektrisches Signal umzuwandeln. Ein einfaches Beispiel für eine solche Kraftmesseinrichtung kann darin gesehen werden, wenn diese wenigstens einen elektrischen Messleiter aufweist, dessen elektrischer Widerstand sich in Abhängigkeit von einer auf den Messleiter ausgeübten Kraft ändert.

Der elektrische Messleiter kann als Leiterdraht oder durch eine Anzahl von parallel angeordneten Leiterdrähten ausgebildet sein. Bei Verwendung mehrerer Leiterdrähte werden entsprechende statistische Abweichungen von Einzeldrähten ausgeglichen.

Um Temperaturdriften des elektrischen Messleiters ausgleichen zu können, kann ein weiterer elektrischer Messleiter ohne Kraftbeaufschlagung in der Brückenschaltung zur Temperaturkompensation verschaltet sein.

Im Folgenden werden vorteilhafte Ausführungsbeispiele der Erfindung anhand der in der Zeichnung beigefügten Figuren näher erläutert.

Es zeigen:
- Fig. 1: eine Draufsicht auf eine Prinzipdarstellung eines Beispiels einer Wegmessvorrichtung für eine erfindungsgemäße Linearbetätigungsvorrichtung ;
- Fig. 2: eine teilweise geschnittene Draufsicht auf ein zweites Beispiel;
- Fig. 3: eine teilweise geschnittene Draufsicht auf ein drittes Beispiel;
- Fig. 4: eine teilweise geschnittene Draufsicht auf ein viertes Beispiel;
- Fig. 5: eine Schaltkreisdarstellung analog zu Fig. 4;
- Fig. 6: einen Längsschnitt durch eine Linearbetätigungsvorrichtung mit eingebauter Wegmessvorrichtung in teilweiser Darstellung;
- Fig. 7: eine vergrößerte Darstellung eines Details "X", und
- Fig. 8: eine vergrößerte Darstellung eines Details "Y".

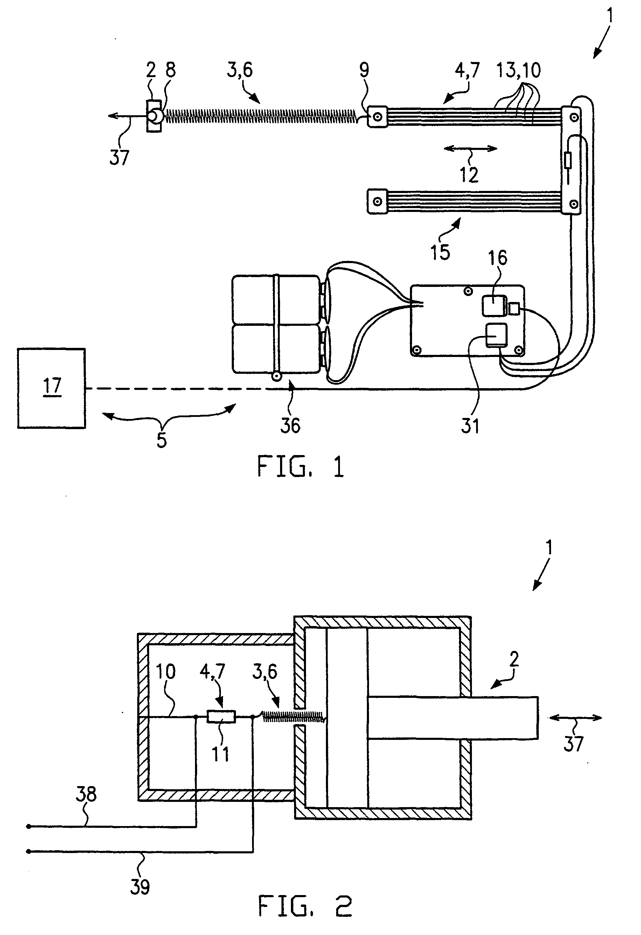

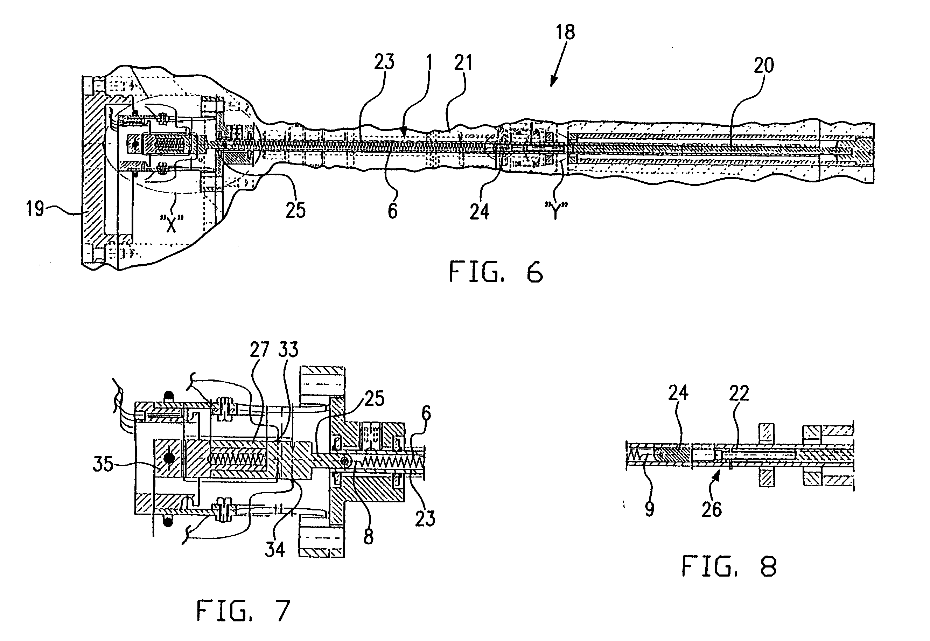

In Fig. 1 ist eine Draufsicht auf ein prinzipielles Beispiel einer Wegmessvorrichtung 1 für eine erfindungsgemäße Linearbetätigungsvorrichtung dargestellt. Diese weist ein Federelement 6 als erstes Bauteil und eine Kraftmesseinrichtung 7 als zweites Bauteil 4 auf. Das erste Bauteil 3 ist mit einem Betätigungselement 20, siehe Fig.6, als D) Bewegungsobjekt 2 an einem Ende 8 verbunden. Bei Bewegung des Bewegungsobjekts 2 in Richtung 37 wird das Federelement 6 gedehnt und eine entsprechende Kraft über Ende 9 des Federelementes 6 auf das zweite Bauteil 4, d.h. die Kraftmesseinrichtung 7, ausgeübt. Mittels der Kraftmesseinrichtung 7 wird die ausgeübte Kraft in ein elektrisches Signal umgesetzt, aus dem durch die anschießende Auswerteeinheit 5 eine entsprechende Position des Bewegungsobjekts 2 ermittelt wird.

Das Bewegungsobjekt 2 bewegt sich linear in Bewegungsrichtung 37 und in Längsrichtung 12 des Federelementes 6 oder der Kraftmesseinrichtung 7.

Die Kraftmesseinrichtung 7 ist durch einen elektrischen Leiter 10 gebildet, der eine Anzahl von elektrischen Leitungsdrähten 13 umfassen kann. Diese ändern ihren Widerstand in Abhängigkeit von der auf sie ausgeübten Kraft. Das heißt, eine Widerstandsänderung der elektrischen Leiterdrähte 13 entspricht einer durch das Federelement 6 übertragenen Kraft und die Kraft ist proportional zu einer Auslenkung des Federelementes 6 und damit zu einer Position des Bewegungsobjekts 2.

Die Drähte 13 sind parallel zueinander angeordnet und können elektrisch ebenfalls parallel oder auch in Reihe verschaltet sein. Die Drähte 13 bilden einen Widerstand, der Teil einer Brückenschaltung ist, siehe Fig. 5. Ein weiterer Widerstand 15 dieser Brückenschaltung ist ebenfalls durch eine Anzahl von elektrischen Leiterdrähten gebildet und dieser weitere elektrische Widerstand 15 entspricht dem durch die elektrischen Leiterdrähte 13 gebildeten Widerstand und dient zur Temperaturkompensation.

Mit den durch die Drähte gebildeten Widerständen ist eine Offset-Einrichtung 31, 32 und ein Verstärker 16 verbunden. Von dem Verstärker sind entsprechende Signale an eine Ausgabeeinheit der Auswerteeinheit 5 ausgebbar, wobei diese Auswerteeinheit 5 auch einen Differenzierer 17 aufweisen kann, durch den die entsprechenden sich zeitlich ändernden Positionswerte des Bewegungsobjekts 2 differenzierbar und somit eine Geschwindigkeit und gegebenenfalls Beschleunigung des Bewegungsobjekts ermittelbar ist.

Durch die Offset-Einrichtung 31, 32 ist ein Nullpunkt der Auslenkung des Federelementes 6 einstellbar. Beispielsweise kann die Feder 2 bis 5 % vorgespannt sein, um einen solchen messbaren Nullpunkt für die Bewegung des Bewegungsobjekts 2 zu erzeugen. Ein dieser Vorspannung zugeordneter Spannungswert wird mittels der Offset-Einrichtung 31, 32 auf Null geregelt.

Zur Spannungsversorgung der Drähte und der Auswerteeinrichtung 5 ist eine Spannungsversorgung 36 mit den Drähten und der Auswerteeinheit verbunden.

In Fig. 2 ist ein weiteres Beispiel einer Wegmessvorrichtung analog zu Fig. 1 dargestellt. Das Bewegungsobjekt 2 ist durch eine in einem Gehäuse in Bewegungsrichtung 37 beweglich gelagerten Stempel gebildet. Dieser ist auf seiner Rückseite mit dem Federelement 6 verbunden. In Reihe zum Federelement 6 ist ein elektrischer Leiter 10 als Kraftmesser 7 mit einem Widerstand 11 angeschlossen, der an seinem dem Federelement 6 gegenüberliegenden Ende am Gehäuse befestigt ist. Der Widerstand 11 ist über zwei Verbindungsleitungen 38, 39 mit einer entsprechenden Brückenschaltung, siehe Fig. 5, verbunden.

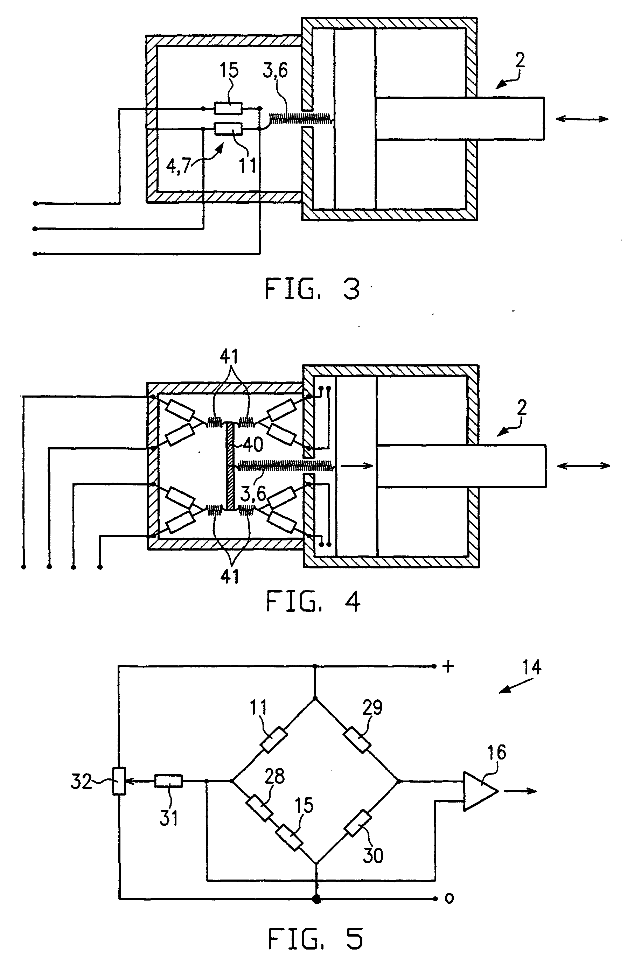

In Fig. 3 ist ein weiteres Beispiel analog zu Fig. 2 dargestellt. Dieses Beispiel entspricht dem Beispiel nach Fig. 1, wobei ein weiterer Widerstand 15 analog zum Widerstand 11 angeordnet und Teil der Brückenschaltung nach Fig. 5 ist. Durch den weiteren Widerstand 15 in unmittelbarer Nähe zum Widerstand 11 ist beispielsweise eine Temperaturkompensation der Wegmessung möglich.

In Fig. 4 ist ein viertes Beispiel analog zu den vorangehenden Fig. 2 und 3 dargestellt. Bei diesem Beispiel erfolgt eine Kraftmessung über alle Widerstände der Brückenschaltung nach Fig. 5. Das Federelement 6 wirkt entsprechend auf alle Leiter ein, die zumindest teilweise durch separate Federelemente gebildet sein können. Je nach Auslenkung einer mittig mit dem Federelement 6 verbundenen Anschlussplatte 40 werden auch die entsprechenden Einzelfederelemente 41 gedehnt bzw. gestaucht und entsprechende Widerstandsänderungen induziert.

Ein Schaltbild für eine Brückenschaltung zur Bestimmung einer Widerstandsänderung und damit einer entsprechenden Spannungsänderung ist in Fig. 5 in Form einer sogenannten Wheatstone-Brücke dargestellt. Eine solche Schaltung ist an sich bekannt. Die Schaltung wird durch zumindest vier Widerstände gebildet, von denen beispielsweise die Widerstände 29 und 30 mit gleichem Widerstandswert ausgebildet sind. Zumindest ein Widerstand der Brückenschaltung ist durch den Widerstand 11 des elektrischen Leiters 10 gebildet, siehe Fig. 2. Auch die Widerstände 15, 28 können durch einen bezüglich der Wegmessung unabhängigen Widerstand gebildet sein. In der Regel ist dieser allerdings variierbar, um anfänglich vor Auslenkung des Bewegungsobjekts die Brückenschaltung auf Null abzugleichen

Bei dem Beispiel nach Fig. 5 ist auch der Widerstand 15, siehe Fig. 3, durch eine Anzahl von elektrischen Drähten, siehe auch Fig. 1, gebildet. In diesem Fall dient der Widerstand 15 zur Temperaturkompensation des Widerstands 11. Eine Offset-Einstellung, d.h. die Einstellung eines Nullpunkts bei leicht vorgespannten Federelementen 6, ist durch den Widerstand 31 im Zusammenhang mit dem Widerstand 32 möglich.

Die erfassten Signale werden über einen Verstärker 16, siehe auch Fig. 1, zur Weiter verarbeitung an die Auswerteeinrichtung 5 von der Brückenschaltung 14 übermittelt.

Ein Zweig der Brückenschaltung ist geerdet, siehe "O" und der andere Zweig liegt am Pluspol einer Spannungsversorgung.

In Fig. 6 ist ein Ausführungsbeispiel der erfindungsgemäßen Linearbetätigungsvorrichtung dargestellt. Die Wegmessvorrichtung 1 ist in der Linearantriebsvorrichtung 21 angeordnet, wie sie beispielsweise in der DE 20 008 415 des gleichen Anmelders beschrieben ist. Eine solche Linearantriebsvorrichtung 21 weist zumindest das Betätigungselement 20 auf, das in Längsrichtung hin und her bewegbar ist. Das Betätigungselement 20 ist in der Regel eine Kugelspindel, die in einer Kugelumlaufmutter drehbar gelagert ist. Bei Drehung der Kugelumlaufmutter mittels einer nur teilweise in Fig. 6 dargestellten Antriebsvorrichtung 21 erfolgt eine entsprechende Drehung des Betätigungselementes 20 und durch die Drehung relativ zur in Längsrichtung festliegenden Kugelumlaufmutter ergibt sich eine Bewegung des Betätigungselementes 20 in Längsrichtung.

Das Betätigungselement 20 ist an einem Ende 22, siehe auch Fig. 8, mit dem Federelement 6 der Wegmessvorrichtung 1 verbunden. Das Federelement ist in einem Rohr 23 durch die Antriebsvorrichtung 21 geführt und mit seinem dem Betätigungselement 20 gegenüberliegenden Ende 8 mit einer entsprechenden Kraftmesseinrichtung 7 in Form eines elektrischen Messleiters 27 verbunden. Die Umsetzung der vom Betätigungselement 20 auf das Federelement 6 ausgeübten Kraft mittels der Kraftmesseinrichtung 7 bzw. des entsprechenden elektrischen Messleiters 27 in eine entsprechende Spannung erfolgt analog zu den oben beschriebenen Ausführungsbeispielen der Wegmessvorrichtung 1.

Das Federelement 6 nach Fig. 6 bis 8 ist über Anschlussstücke 24 und 25 mit dem Betätigungselement 20 bzw. mit dem elektrischen Messleiter 27 verbunden. Zumindest das Anschlussstück 24 weist eine Drehentkoppelungseinrichtung 26 auf. Durch diese wird eine Übertragung der Drehung des als Kugelspindel ausgebildeten Betätigungselementes 20 auf das Federelement 6 verhindert. Die Drehentkoppelungseinrichtung 26 kann beispielsweise durch eine Schraube gebildet sein, die in das Betätigungselement 20 an dessem Ende 22 eingeschraubt ist und die im Anschlussstück 24 drehbar aber in Längsrichtung des Federelementes 6 festgelegt gelagert ist.

Fig. 7 entspricht einer vergrößerten Darstellung des Ausschnitts "X" aus Fig. 6 und Fig. 8 ist eine vergrößerte Darstellung des Ausschnitts "Y" aus Fig. 6.

In Fig. 7 ist insbesondere die Verbindung des Federelementes 6 mit dem Anschlussstück 25 dargestellt. Mit diesem ist der elektrische Messleiter 27 verbunden, der an seinem dem Federelement 6 gegenüberliegenden Ende an einem Festpunkt 35 des Gehauses 19 der Linearbetätigungsvorrichtung 18 befestigt ist. An dem elektrischen Messleiter 27 sind entsprechende Verbindungsdrähte über Lötstellen 33, 34 angeschlossen, die zu einer Brückenschaltung 14, siehe Fig. 5, führen.

Erfindungsgemäß ist es möglich, in einfacher und preiswerter Weise insbesondere eine Linearbewegung eines Bewegungsobjekts 2 zu messen. Die Messung erfolgt dadurch, dass bei Bewegung des Bewegungsobjekts 2 eine Rückhaltekraft durch ein Federelement 6 ausgeübt wird. Diese ist allerdings so gering, dass sie die erwünschte Bewegung des Bewegungsobjekts 2 nicht oder nur wenig hindert. Die von dem Federelement 6 ausgeübte Rückhaltekraft wird auf einen elektrischen Leiter als Kraftmesseinrichtung 7 übertragen. Der elektrische Leiter weist beispielsweise eine Anzahl von Drähten auf, deren Widerstandswerte sich bei Ausüben eine Zugkraft in Längsrichtung der Drähte ändert. Die Änderung des Widerstandswertes wird durch eine entsprechende Änderung einer an dem Widerstand abfallenden Spannung ermittelt, wobei diese Widerstandsänderung und damit auch die zugehörige Spannungsänderung abhängig von der ausgeübten Kraft sind. Wird aus den Widerstandsänderungen durch entsprechende Berechnungen die Kraft ermittelt, die von dem Federelement auf das Bewegungsobjekt 2 ausgeübt wird, so lässt sich in einfacher Weise aus der Kraft bei Kenntnis der entsprechenden Parameter (Federkonstante) des Federelementes 6 die Auslenkung der Feder und damit die Position des Bewegungsobjekts 2 ermitteln.

## Patentansprüche

1. Linearbetätigungsvorrichtung, insbesondere zur Betätigung von Ventilen, Drosseln oder dergleichen bei der Öl- und/oder Gasgewinnung, mit einem linear beweglichen, innerhalb eines Gehäuses (19) gelagerten Betätigungselement (20) als Teil einer Linearantriebsvorrichtung (21), sowie einer Wegmessvorrichtung zur Messung des von dem Betätigungselement (20) zurückgelegten Weges, wobei die Wegmessvorrichtung ein an einem ihrer Enden mit dem Betätigungselement (20) verbundenes Federelement (6) und eine mit dem anderen Ende des Federelements (6) verbundene Kraftmesseinrichtung (7) aufweist, die am Gehäuse (19) befestigt ist, und ein einer auf das Federelement (6) ausgeübten Kraft entsprechendes elektrisches Signal an eine Auswerteeinrichtung (5) der Wegmessvorrichtung zur Umsetzung dieses Signals in eine Bewegungs- und/oder Positionsinformation abgibt.

2. Linearbetätigungsvorrichtung nach Anspruch 1, **dadurch gekennzeichnet, dass** das Federelement (6) im Wesentlichen eine Spiralfeder ist.

3. Linearbetätigungsvorrichtung nach Anspruch 1 oder 2, **dadurch gekennzeichnet, dass** das Federelement (6) sich im Wesentlichen geradlinig erstreckt.

4. Linearbetätigungsvorrichtung nach wenigstens einem der vorangehenden Ansprüche, **dadurch gekennzeichnet, dass** das Federelement (6) austauschbar ist.

5. Linearbetätigungsvorrichtung nach wenigstens einem der vorangehenden Ansprüche, **dadurch gekennzeichnet, dass** die Kraftmesseinrichtung (7) wenigstens einen elektrisch leitfähigen, insbesondere drahtförmigen Leiter (10) aufweist, dessen elektrischer Widerstand (11) abhängig von einer auf ihn insbesondere in Längsrichtung (12) ausgeübten Kraft ist.

6. Linearbetätigungsvorrichtung nach wenigstens einem der vorangehenden Ansprüche, **dadurch gekennzeichnet, dass** der Leiter (10) eine Anzahl von parallel zueinander angeordneten Drähten (13) aufweist.

7. Linearbetätigungsvorrichtung nach wenigstens einem der vorangehenden Ansprüche, **dadurch gekennzeichnet, dass** der elektrische Leiter (10) in einer Brückenschaltung (14) verschaltet ist und wenigstens einen Widerstand der Brückenschaltung bildet.

8. Linearbetätigungsvorrichtung nach wenigstens einem der vorangehenden Ansprüche, **dadurch gekennzeichnet, dass** das Federelement (6) zur Festlegung eines Nullpunkts der Auslenkung des Betätigungselement (20) vorgespannt ist.

9. Linearbetätigungsvorrichtung nach wenigstens einem der vorangehenden Ansprüche, **dadurch gekennzeichnet, dass** Federelement (6) und/oder Kraftmesseinrichtung (7) aus entsprechend zum Einsatzgebiet der Wegmessvorrichtung (1) ausgewählten Materialien gebildet sind.

10. Linearbetätigungsvorrichtung nach wenigstens einem der vorangehenden Ansprüche, **dadurch gekennzeichnet, dass** die Auswerteeinrichtung (5) einen Verstärker (16) und/oder einen Differenzierer (17) und/oder eine Ausgabeeinrichtung aufweist.

11. Linearbetätigungsvorrichtung nach Anspruch 1, **dadurch gekennzeichnet, dass** das Federelement (6) in einem Rohr (23) geführt ist.

12. Linearbetätigungsvorrichtung nach Anspruch 1 oder 12, **dadurch gekennzeichnet, dass** das Federelement (6) an seinen Enden (8,9) über Anschlussstücke (24,25) an dem Betätigungselement (20) bzw. der Kraftmesseinrichtung (7) befestigt ist.

13. Linearbetätigungsvorrichtung nach Anspruch 13 **dadurch gekennzeichnet, dass** zumindest das Anschlussstück (24) zwischen Federelement (6) und Betätigungselement (20) eine Drehentkopplungseinrichtung **(26) aufweist.**

14. Linearbetätigungsvorrichtung nach Anspruch 7 **dadurch gekennzeichnet, dass** ein weiterer elektrischer Leiter ohne Kraftbeaufschlagung in der Brückenschaltung (14) zumindest zur Temperaturkompensation verschaltet ist.

## Claims

1. Linear actuating device, in particular for operating valves, throttles or the like in oil and/or gas production, having a linearly moveable actuator (20) mounted inside a housing (19) as part of a linear drive device (21), as well as a position sensor for measuring the distance covered by the actuator (20), wherein the position sensor has a spring element (6) connected on one of its ends to the actuator (20) and a force measurement instrument (7) connected to the other end of the spring element (6), which is fastened to the housing (19), and sends an electrical signal, corresponding to the force exerted on the spring element (6), to an evaluator (5) of the position sensor for converting this signal to movement- and/or position data.

2. Linear actuating device according to Claim 1, **characterized in that** the spring element (6) is substantially a spiral spring.

3. Linear actuating device according to Claim 1 or 2, **characterized in that** the spring element (6) extends substantially in a straight line.

4. Linear actuating device according to at least one of the preceding claims, **characterized in that** the spring element is exchangeable (6).

5. Linear actuating device according to at least one of the preceding claims, **characterized in that** the force measurement instrument (7) has at least one electrically conductive, in particular wire-formed conductor (10), whose electrical resistance (11) is dependent upon a force exerted thereon, particularly in the longitudinal direction (12).

6. Linear actuating device according to at least one of the preceding claims, **characterized in that** the conductor (10) has a number of wires (13) arranged in parallel.

7. Linear actuating device according to at least one of the preceding claims, **characterized in that** the electrical conductor (10) is wired in a bridge circuit (14) and forms at least one resistor of the bridge circuit.

8. Linear actuating device according to at least one of the preceding claims, **characterized in that** the spring element (6) is pre-biased in order to define a zero point for the movement of the actuator (20).

9. Linear actuating device according to at least one of the preceding claims, **characterized in that** spring element (6) and/or force measurement instrument (7) are constructed from materials, selected corresponding to the area of use of the position sensor (1).

10. Linear actuating device according to at least one of the preceding claims, **characterized in that** the evaluator (5) has an amplifier (16) and/or a differentiator (17) and/or an output device.

11. Linear actuating device according to Claim 1, **characterized in that** the spring element (6) is guided in a tube (23).

12. Linear actuating device according to Claim 1 or 12, **characterized in that** the spring element (6) on its ends (8, 9) is fastened via connecting pieces (24, 25) to the actuator (20) or force measurement instrument (7).

13. Linear actuating device according to Claim 13, **characterized in that** at least the connecting piece (24) between spring element (6) and actuator (20) has a rotation de-coupling unit (26).

14. Linear actuating device according to Claim 7, **characterized in that** a further electrical conductor with no force being exerted thereon is wired in the bridge circuit (14) at least for temperature compensation.

## Revendications

1. Dispositif actionneur linéaire, en particulier pour l'actionnement de vannes, dispositifs d'étranglement, ou similaires, dans le cadre de l'exploitation de pétrole et/ou de gaz, comprenant un élément actionneur (20) mobile en déplacement linéaire, logé à l'intérieur d'un boîtier (19), en tant que partie d'un dispositif d'entraînement linéaire (21), ainsi qu'un élément de mesure de course destiné à mesurer la distance parcourue par l'élément actionneur (20), le dispositif de mesure de course comprenant un élément ressort (6) relié par l'une de ses extrémités à l'élément actionneur (20) et un dispositif de mesure de la force (7) relié à l'autre extrémité de l'élément ressort (6) et fixé sur le boîtier (19), et émettant, vers un dispositif d'analyse (5) du dispositif de mesure de la course, un signal électrique correspondant à une force exercée sur l'élément ressort (6), en vue de traduire ce signal en une information de déplacement et/ou de position.

2. Dispositif actionneur linéaire selon la revendication 1, **caractérisé en ce que** l'élément ressort (6) est pour l'essentiel un ressort hélicoïdal.

3. Dispositif actionneur linéaire selon la revendication 1 ou 2, **caractérisé en ce que** l'élément ressort (6) s'étend essentiellement en ligne droite.

4. Dispositif actionneur linéaire selon l'une au moins des revendications précédentes, **caractérisé en ce que** l'élément ressort (6) est remplaçable.

5. Dispositif actionneur linéaire selon l'une au moins des revendications précédentes, **caractérisé en ce que** le dispositif (7) de mesure de la force comporte au moins un conducteur (10) électriquement conducteur, notamment filiforme, dont la résistance électrique (11) dépend d'une force exercée notamment dans le sens longitudinal (12) sur ce conducteur.

6. Dispositif actionneur linéaire selon l'une au moins des revendications précédentes, **caractérisé en ce que** le conducteur (10) comporte un nombre de fils (13) disposés parallèlement les uns aux autres.

7. Dispositif actionneur linéaire selon l'une au moins des revendications précédentes, **caractérisé en ce que** le conducteur électrique (10) est branché à l'intérieur d'un circuit à pont (14) et constitue l'une au moins des résistances du circuit à pont.

8. Dispositif actionneur linéaire selon l'une au moins des revendications précédentes, **caractérisé en ce que** l'élément ressort (6) est précontraint de manière à définir un point zéro du déplacement de l'élément actionneur (20).

9. Dispositif actionneur linéaire selon l'une au moins des revendications précédentes, **caractérisé en ce que** l'élément ressort (6) et/ou le dispositif (7) de mesure de la force est/sont réalisé(s) à partir de matériaux sélectionnés en fonction du domaine d'utilisation du dispositif de mesure de course (1).

10. Dispositif actionneur linéaire selon l'une au moins des revendications précédentes, **caractérisé en ce que** le dispositif d'analyse (5) comprend un amplificateur (16) et/ou un circuit différenciateur (17) et/ou un dispositif de sortie.

11. Dispositif actionneur linéaire selon la revendication 1, **caractérisé en ce que** l'élément ressort (6) est guidé dans un tube (23).

12. Dispositif actionneur linéaire selon la revendication 1 ou 11, **caractérisé en ce que** l'élément ressort (6) est fixé, par ses extrémités (8, 9), à l'élément actionneur (20) et au dispositif de mesure de force (7), par l'intermédiaire d'éléments adaptateurs (24, 25).

13. Dispositif actionneur linéaire selon la revendication 12, **caractérisé en ce qu'**au moins l'élément adaptateur (24) présente un dispositif (26) de découplage de rotation entre l'élément ressort (6) et l'élément actionneur (20).

14. Dispositif actionneur linéaire selon la revendication 7, **caractérisé en ce qu'**un autre conducteur électrique du circuit à pont (14), non soumis à une force, est branché au moins en vue de réaliser une compensation thermique.
